(19) Europäisches Patentamt
European Patent Office
Office européen des brevets

(11) **EP 4 661 569 A1**

(12) **EUROPEAN PATENT APPLICATION**
published in accordance with Art. 153(4) EPC

(43) Date of publication:
**10.12.2025 Bulletin 2025/50**

(21) Application number: **23919044.0**

(22) Date of filing: **01.02.2023**

(51) International Patent Classification (IPC):
**H04W 72/40** (2023.01)

(52) Cooperative Patent Classification (CPC):
**H04W 72/40**

(86) International application number:
**PCT/CN2023/074168**

(87) International publication number:
**WO 2024/159467 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **JIANG, Xiaowei**
**Beijing 100085 (CN)**

(74) Representative: **Dehns Germany Partnerschaft
mbB**
**Theresienstraße 6-8**
**80333 München (DE)**

(54) **RESOURCE DETERMINATION METHOD AND APPARATUS, AND STORAGE MEDIUM**

(57) The present disclosure relates to a resource determination method and apparatus, and a storage medium. The method comprises: a first terminal device determining delay requirement information corresponding to a sidelink positioning reference signal (SL PRS), and determining a first wireless resource used to send the SL PRS according to the delay requirement information. In this way, the first wireless resource for sending the SL PRS can be determined according to the delay requirement information, thereby improving timeliness of SL PRS transmission.

A first terminal device determines delay requirement information corresponding to a sidelink positioning reference signal (SL PRS) — S201

The first terminal device determines a first wireless resource used to send the SL PRS according to the delay requirement information — S202

FIG. 2

EP 4 661 569 A1

## Description

## TECHNICAL FIELD

The present disclosure relates to the technical field of communication, and in particular, to a resource determination method, apparatus, and storage medium.

## BACKGROUND

With the development of wireless communication technology, in order to achieve direct communication between terminal devices, the 3rd Generation Partnership Project (3GPP) defines the communication mode of direct link (Sidelink, also known as side link or lateral link). For example, one typical application scenario of sidelink is vehicle-to-everything (V2X). In the V2X, each vehicle can be used as a terminal, and information can be transmitted between terminals through sidelink, which can effectively reduce the communication delay.

In a sidelink communication scenario, in order to perform positioning or ranging of the terminal device, the terminal device needs to send and/or receive a sidelink positioning reference signal (SL-PRS).

## SUMMARY

The present disclosure provides a resource determination method, apparatus and storage medium.

According to a first aspect of embodiments of the present disclosure, a resource determination method is provided, which is performed by a first terminal device, and the method includes:

  determining delay requirement information corresponding to a sidelink positioning reference signal (SL PRS); and
  determining a first radio resource for sending the SL PRS according to the delay requirement information.

According to a second aspect of the embodiments of the present disclosure, a resource determination method is provided, which is performed by a network device, and the method includes:

  determining delay requirement information corresponding to a sidelink positioning reference signal (SL PRS) of a first terminal device; and
  in response to determining that a resource allocation mode corresponding to the SL PRS is a first resource allocation mode based on resource selection by the network device, allocating a first radio resource for sending the SL PRS to the first terminal device according to the delay requirement information.

According to a third aspect of the embodiments of the present disclosure, a resource determination apparatus is provided, which is applied to a first terminal device, and the apparatus includes:
a first processing module, configured to determine delay requirement information corresponding to a sidelink positioning reference signal (SL PRS); and determine a first radio resource for sending the SL PRS according to the delay requirement information.

According to a fourth aspect of the embodiments of the present disclosure, a resource determination apparatus is provided, which is applied to a network device, and the apparatus includes:
a second processing module, configured to determine delay requirement information corresponding to a sidelink positioning reference signal (SL PRS) of a first terminal device; and in response to determining that a resource allocation mode corresponding to the SL PRS is a first resource allocation mode based on resource selection by the network device, allocate a first radio resource for sending the SL PRS to the first terminal device according to the delay requirement information.

According to a fifth aspect of the embodiments of the present disclosure, a resource determination apparatus is provided, including:

  a processor; and
  a memory for storing instructions executable by the processor;
  where the processor is configured to execute the steps of the resource determination method provided in the first aspect of the present disclosure.

According to a sixth aspect of the embodiments of the present disclosure, a resource determination apparatus is provided, including:

  a processor; and
  a memory for storing instructions executable by the processor;
  where the processor is configured to execute the steps of the resource determination method provided in the second aspect of the present disclosure.

According to a seventh aspect of the embodiments of the present disclosure, a computer-readable storage medium is provided, on which computer program instructions are stored. When the computer program instructions are executed by a processor, the steps of the resource determination method provided in the first aspect of the present disclosure are implemented.

According to an eighth aspect of the embodiments of the present disclosure, a computer-readable storage medium is provided, on which computer program instructions are stored. When the computer program instructions are executed by a processor, the steps of the resource determination method provided in the second aspect of the present disclosure are implemented.

According to a ninth aspect of the embodiments of the present disclosure, a communication system is provided, including:

a first terminal device, where the first terminal device can perform the resource determination method provided in the first aspect of the present disclosure; and

a network device, where the network device can perform the resource determination method provided in the second aspect of the present disclosure.

The technical solutions provided by the embodiments of the present disclosure can include the following beneficial effects: the first terminal device determines the delay requirement information corresponding to the sidelink positioning reference signal (SL PRS), and determines the first radio resource for sending the SL PRS according to the delay requirement information. In this way, the first radio resource for sending the SL PRS can be determined according to the delay requirement information, thereby improving the timeliness of sending the SL PRS.

It is to be understood that the foregoing general description and the following detailed description are exemplary and explanatory only and are not restrictive of the present disclosure.

## BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.

FIG. 1 is a schematic diagram showing a communication system according to an exemplary embodiment.

FIG. 2 is a flowchart showing a resource determination method according to an exemplary embodiment.

FIG. 3 is a flowchart showing a resource determination method according to an exemplary embodiment.

FIG. 4 is a flowchart showing a resource determination method according to an exemplary embodiment.

FIG. 5 is a flowchart showing a resource determination method according to an exemplary embodiment.

FIG. 6 is a flowchart showing a resource determination method according to an exemplary embodiment.

FIG. 7 is a flowchart showing a resource determination method according to an exemplary embodiment.

FIG. 8 is a flowchart showing a resource determination method according to an exemplary embodiment.

FIG. 9 is a flowchart showing a resource determination method according to an exemplary embodiment.

FIG. 10 is a flowchart showing a resource determination method according to an exemplary embodiment.

FIG. 11 is a flowchart showing a resource determination method according to an exemplary embodiment.

FIG. 12 is a block diagram showing a resource determination apparatus according to an exemplary embodiment.

FIG. 13 is a block diagram showing a resource determination apparatus according to an exemplary embodiment.

FIG. 14 is a block diagram showing a resource determination apparatus according to an exemplary embodiment.

FIG. 15 is a block diagram showing a resource determination apparatus according to an exemplary embodiment.

FIG. 16 is a block diagram showing a resource determination apparatus according to an exemplary embodiment.

## DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

It should be noted that all actions of acquiring signals, information or data in the present disclosure are carried out in compliance with the relevant data protection laws and policies of the country where the corresponding apparatus is located and with the authorization given by the owner of the corresponding apparatus.

In the description of the present disclosure, the terms used, such as "first", "second", etc., are used to distinguish similar objects and are not necessarily understood as a specific order or sequence. In addition, in the description with reference to the accompanying drawings, the same symbols in different drawings represent the same elements unless otherwise stated.

In the description of the present disclosure, unless otherwise specified, "a plurality of" means two or more than two, and other quantifiers are similar. "At least one (item)", "one or more (items)" or similar expressions refer to any combination of these items, including any combination of single or plural items. For example, at least one item can represent any number; for another example, one or more items of *a, b* and *c* can represent: *a, b, c, a-b, a-c, b-c,* or *a-b-c,* where *a, b,* c can be single or multiple. "And/or" is used to describe the association relationship between associated objects, and indicates that there may be three types of relationships. For example, A and/or B may indicate that A exists alone, A and B exist at the same time, and B exists alone, where A and B may be singular or plural. The character "/" indicates that the objects associated with each other are in an "or" relationship. The singular forms "one/a/an", "one kind of", "one item", "said" and "the" are also intended to include the plural forms, unless the context clearly indicates otherwise.

Although operations or steps are described in a specific order in the embodiments or drawings of the present disclosure, it should not be understood as requiring these operations or steps to be performed in the specific order or serial order shown, or requiring all the operations or steps shown to be performed to obtain the desired result. In the embodiments of the present disclosure, if there is no contradiction, these operations or steps can be performed in any order; these operations or steps can also be performed in parallel; part of these operations or steps can also be performed; and the operations or steps in multiple embodiments or drawings can also be arbitrarily combined, which are not limited by the present disclosure.

The implementation environment of the embodiments of the present disclosure is first introduced below.

The technical solutions of the embodiments of the present disclosure can be applied to various communication systems. The communication system may include one or more of the 4th Generation (4G), the 5th Generation (5G), and other future wireless communication systems (such as 6G). The communication system may also include one or more of a public land mobile network (PLMN), a device-to-device (D2D) communication system, a machine to machine (M2M) communication system, an Internet of Things (IoT) communication system, a vehicle-to-everything (V2X) communication system, or other communication systems.

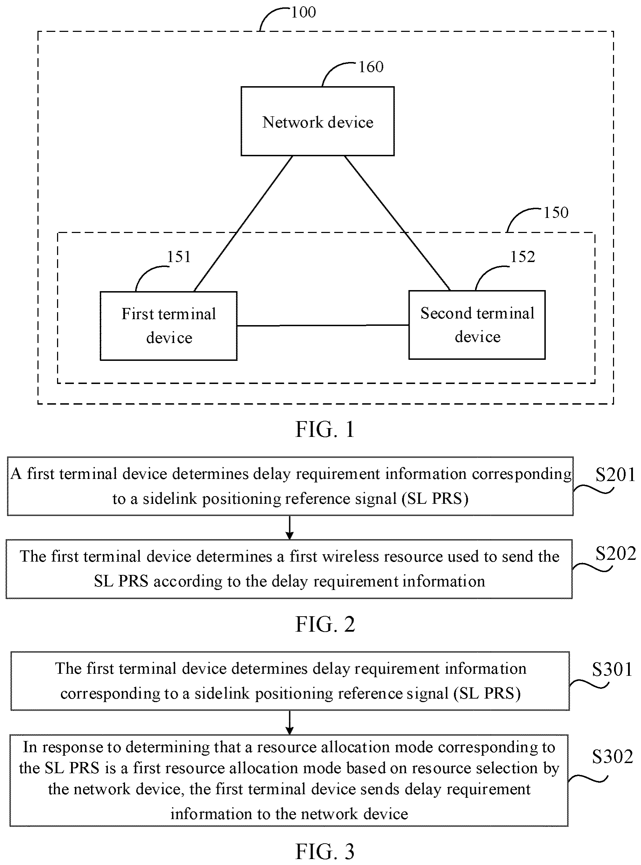

FIG. 1 is a schematic diagram of a communication system 100 according to an exemplary embodiment. As shown in FIG. 1, the communication system 100 may include a terminal device 150 and a network device 160. The communication system may be used to support 4G network access technology, such as Long Term Evolution (LTE) access technology, or 5G network access technology, such as New Radio Access Technology (New RAT), or other future wireless communication technologies. It should be noted that in the communication system, the numbers of the network devices and the terminal devices may be one or more, and the numbers of the network devices and the terminal devices of the communication system shown in FIG. 1 is only an adaptive example, which is not limited by the present disclosure.

The network device in FIG. 1 can be used to support terminal access. For example, the network device can be an evolutional Node B (eNB or eNodeB) in LTE; the network device can also be the next generation Node B (gNB or gNodeB) in the 5G network; the network device can also be a wireless access network device in the 5G network (NG-Radio Access Network, NG-RAN); the network device can also be a base station, a broadband network service gateway (Broadband Network Gateway, BNG), an aggregation switch or a non-3GPP access device in the future evolved public land mobile network (PLMN). Optionally, the network device in the embodiments of the present disclosure may include various forms of base stations, such as: macro base stations, micro base stations (also called small stations), relay stations, access points, 5G base stations or future base stations, satellites, transmission points (Transmitting and Receiving Points, TRPs), Transmitting Points (TPs), mobile switching centers, and device-to-device (D2D), machine-to-machine (M2M), Internet of Things (IoT), vehicle-to-everything (V2X) or other devices that assume the function of the base station in the communication system, etc., which are not specifically limited by the embodiments of the present disclosure. For the convenience of description, in all embodiments of the present disclosure, the apparatuses that provide wireless communication functions for the terminal device are collectively referred to as network devices or base stations.

The terminal device in FIG. 1 may be an electronic device that provides voice or data connectivity, for example, the terminal device may also be referred to as a user equipment (UE), a subscriber unit, a mobile station, a station, a terminal, etc. For example, the terminal device may include a smart phone, a smart wearable device, a smart speaker, a smart tablet, a wireless modem, a wireless local loop (WLL) station, a personal digital assistant (PDA), a customer premise equipment (CPE), etc. With the development of the wireless communication technology, devices that can access a communication system, can communicate with a network device of a communication system, can communicate with other objects through a communication system, or the devices that can directly communicate between two or more devices can all be the terminal devices in the embodiments of the present disclosure, for example, terminals and cars in intelligent transportation, household devices in smart homes, power meter reading instruments, voltage monitoring instruments, environmental monitoring instruments in smart grids, video monitoring instruments in intelligent security networks, cash registers, etc. In the embodiments of the present disclosure, the terminal device may communicate with the network device. Multiple terminal devices can also communicate with each other. The terminal devices may be static and fixed, or may be movable, which is not limited by the present disclosure.

In some embodiments, the terminal device in FIG. 1 may include a first terminal device 151 and a second terminal device 152, and the first terminal device 151 and the second terminal device 152 may communicate with each other via a Sidelink. The Sidelink communication between the first terminal device 151 and the second terminal device 152 may include any one or more of unicast, multicast or broadcast. It should be noted that in FIG. 1, the terminal device 150 may also include a third terminal device, a fourth terminal device or more terminal devices; the first terminal device 151 may be one or more, and the second terminal device 152 may also be one or more, which is not limited by the present disclosure.

In some embodiments, the first terminal device may communicate with the network device via a non-sidelink, and the non-sidelink may include an uplink channel and/or a downlink channel between the first terminal device and the network device. For example, the non-sidelink may include one or more of Physical Random Access Channel (PRACH), Physical Uplink Control Channel (PUCCH), Physical Uplink Shared Channel (PUSCH), Physical Downlink Shared Channel (PDSCH), Physical Downlink Control Channel (PDCCH), and the like. Similarly, the second terminal device may also communicate with the network device via the non-sidelink.

FIG. 2 is a flowchart of a resource determination method according to an exemplary embodiment. The method may be applied to the first terminal device in the communication system. As shown in FIG. 2, the method may include the following steps.

In S201, the first terminal device determines delay requirement information corresponding to a sidelink positioning reference signal (SL PRS).

There may be one or more pieces of the delay requirement information.

In some embodiments, different pieces of delay requirement information may correspond to different applications of the first terminal device; the delay requirement information corresponding to different applications may be the same or different.

In some embodiments, the delay requirement information corresponding to different terminal devices may be the same or different.

In some embodiments, the delay requirement information may be information agreed upon by a protocol.

In some embodiments, the delay requirement information may be information pre-configured by the first terminal device. For example, the first terminal device may configure the delay requirement information corresponding to each application for multiple applications. For another example, different terminal devices may configure their own delay requirement information. The first terminal device may send the delay requirement information to the network device.

In some embodiments, the delay requirement information may be information pre-configured by the network device. For example, the network device may configure the delay requirement information corresponding to each application for multiple applications. For another example, the network device may also configure the delay requirement information corresponding to each terminal device for multiple terminal devices. The first terminal device may obtain the delay requirement information from the network device, for example, the first terminal device may receive the delay requirement information sent by the network device.

In some embodiments, the delay requirement information may include at least one of the following: a delay requirement, and a remaining delay requirement.

The delay requirement is used to indicate a duration between a starting moment when the first terminal device starts sending the SL PRS and an end moment when the sending of the SL PRS is completed. The starting moment may be the moment when the sending of the SL-PRS is triggered. In one implementation, the starting moment may be the moment when the physical layer of the first terminal device receives the first message. The first message is a request from the higher layer of the first terminal device to the physical layer to determine the first radio resource for sending the SL PRS.

The remaining delay requirement is used to indicate the duration between the current moment and the above end moment.

In some embodiments, the delay requirement may be expressed in units of seconds, milliseconds, slots or symbols. Similarly, the above remaining delay requirement may also be expressed in units of seconds, milliseconds, slots or symbols.

In some embodiments, the first terminal device can calculate and obtain the remaining delay requirement according to the current moment and the delay requirement. For example, the first terminal device can determine the end moment based on the starting moment and the delay requirement, and then calculate and obtain the remaining delay requirement according to the current moment and the end moment.

In S202, the first terminal device determines a first radio resource for sending the SL PRS according to the delay requirement information.

In some embodiments, the first terminal device may send the SL PRS via the first radio resource. For example, the first terminal device may send the SL PRS to the second terminal device via the first radio resource.

In some embodiments, the first radio resource may include a resource element (RE), a resource element group (REG), a resource block (RB), or a resource block group (RBG).

By adopting the method, the first terminal device determines the delay requirement information corresponding to the sidelink positioning reference signal (SL PRS), and determines the first radio resource for sending the SL PRS according to the delay requirement information. In this way, the first radio resource for sending the SL PRS can be determined according to the delay requirement information, thereby improving the timeliness of sending the SL PRS.

In some embodiments, the first terminal device can determine the end moment of completing the sending of the SL PRS according to the delay requirement information; and determine the first radio resource for sending the SL PRS from the second radio resource(s) before the end moment.

For example, the sending moment corresponding to the first radio resource is less than or equal to the end moment, where the sending moment can be used to represent the moment when the first terminal device sends the SL PRS through the first radio resource.

In this way, the sending delay requirement of SL PRS can be met and the timeliness of SL PRS-based positioning can be improved.

In one implementation, if the starting moment when the first terminal device starts sending the SL PRS is slot n, the time domain window of the first radio resource selected by the first terminal device can be in the range of [n+T1, n+T2], that is, the time domain position of the first radio resource is greater than or equal to n+T1 and less than or equal to n+T2.

T1 may be any time greater than or equal to 0 and pre-set by the first terminal device. For example, T1 may be greater than or equal to 0, and T1 may be less than or equal to $T_{proc,1}^{SL}$. $T_{proc,1}^{SL}$ may be pre-set time, and $T_{proc,1}^{SL}$ may be used to indicate the maximum time that the first terminal device processes the data of the sidelink. $T_{proc,1}^{SL}$ is less than or equal to the above delay requirement.

In some embodiments, T2 may be any time greater than or equal to $T_{2min}$ and less than or equal to any time of the delay requirement.

In one implementation, $T_{2min}$ may be T1.

In one implementation, $T_{2min}$ may be less than or equal to the delay requirement.

In one implementation, $T_{2min}$ may be a value in a sidelink selection window list (sl-SelectionWindowList) configured by a higher layer of the first terminal device.

In some embodiments, if $T_{2min}$ is greater than or equal to the delay requirement, T2 may be the above delay requirement.

In this way, through any of these methods, the time domain position of the first radio resource for sending SL PRS can be determined according to the delay requirement information.

It should be noted that the delay requirements for different positioning scenarios may be different. Some positioning scenarios (such as the V2X scenario) have higher requirements for positioning delay, while some positioning scenarios (such as ordinary positioning for finding objects) have lower requirements for positioning delay. In this embodiment, the first radio resource for sending SL PRS can be determined according to the delay requirement information, thereby improving the flexibility of resource allocation.

In other embodiments, the first terminal device can determine the remaining delay requirement according to the delay requirement information, and determine the number of resources of the first radio resource corresponding to the remaining delay requirement according to a delay resource correspondence, where the number of resources may be the number of resource elements (REs), the number of resource element groups (REGs), the number of resource blocks (RBs), or the number of resource block groups (RBGs). The delay resource correspondence may be a preset correspondence between the remaining delay requirement and the number of resources. The lower the remaining delay requirement, the greater the number of resources; conversely, the higher the remaining delay requirement, the smaller the number of resources.

In the embodiments of the present disclosure, there are multiple ways for the first terminal device to determine the delay requirement information corresponding to the SL PRS. The examples are as follows.

In some embodiments, the physical layer of the first terminal device may obtain the delay requirement information through the first protocol layer of the first terminal device. The first protocol layer includes a radio resource control (RRC) layer, an LTE positioning protocol (LPP) layer, or a sidelink LTE positioning protocol (SLPP) layer.

In one implementation, the SLPP layer or LPP layer of the first terminal device may notify the physical layer of the delay requirement information of the SLPRS sending.

For example, the SLPP layer or LPP layer of the first terminal device may obtain the delay requirement information from the application layer of the first terminal device.

For another example, the SLPP layer or LPP layer of the first terminal device may obtain the delay requirement information from the SLPP layer or LPP layer of other terminal device(s).

For another example, the SLPP layer or LPP layer of the first terminal device may determine the delay requirement information according to a session, and each session corresponds to the delay requirement information of its own SL-PRS.

In another implementation, the RRC layer of the first terminal device may notify the physical layer of the delay requirement information of the SLPRS sending.

For example, the RRC layer of the first terminal device can obtain the delay requirement information from the application layer of the first terminal device.

For another example, the RRC layer of the first terminal device may obtain the delay requirement information from the SLPP layer or LPP layer of the first terminal device.

For another example, the RRC layer of the first terminal device may obtain the delay requirement information from the RRC layer of the access network device.

For another example, the RRC layer of the first terminal device can obtain the delay requirement information from the LPP layer of the LMF.

For another example, the RRC layer of the first terminal device may obtain the delay requirement information from the RRC layer of other terminal device.

In one implementation, the RRC layer of the first terminal device can carry the delay requirement information corresponding to the SL-PRS in the logical channel configuration or SRB/DRB configuration information, and the first terminal device can determine the delay requirement configuration information according to the triggering of the SRB/DRB or logical channel corresponding to the SL-PRS.

In some other embodiments, the first terminal device may determine the delay requirement information according to the pre-configured first delay configuration information. For example, the first terminal device may use the first delay configuration information as the delay requirement information.

By way of example, the pre-configured first delay configuration information may be delay configuration information agreed upon by a protocol.

In some other embodiments, the first terminal device may receive second delay configuration information sent by the network device, and determine the delay requirement information according to the second delay configuration information. For example, the first terminal device may use the second delay configuration information as the delay requirement information.

For example, the first terminal device may receive the second delay requirement configuration information indicated by the network device via the PDCCH.

For another example, the first terminal device may receive the second delay requirement configuration information sent by the network device through a second message.

The second message may include at least one of a radio resource control (RRC) message, a media access control control element (MAC CE), downlink control information (DCI) or other messages sent by the network device to the first terminal device.

In some other embodiments, the first terminal device may receive the third delay configuration information sent by the third terminal device, and determine the delay requirement information according to the third delay configuration information. For example, the first terminal device may use the third delay configuration information as the delay requirement information.

For example, the first terminal device may receive the third delay requirement configuration information indicated by other terminal devices (e.g., the third terminal device) through the SCI.

For another example, the first terminal device may receive the third delay requirement configuration information sent by other terminal device(s) through a third message.

The third message may include at least one of a sidelink radio resource control (Sidelink RRC) message, a sidelink media access control control element (Sidelink MAC CE), sidelink downlink control information (Sidelink DCI) or other messages corresponding to the sidelink.

In this way, the first terminal device can determine the delay requirement information through any of the above methods.

FIG. 3 is a flowchart of a resource determination method according to an exemplary embodiment. As shown in FIG. 3, the method may include the following steps.

In S301, the first terminal device determines the delay requirement information corresponding to the sidelink positioning reference signal (SL PRS).

In S302, in response to determining that a resource allocation mode corresponding to the SL PRS is a first resource allocation mode based on resource selection by a network device, the first terminal device sends delay requirement information to the network device.

The delay requirement information is used to instruct the network device to allocate a first radio resource for sending SL PRS to the first terminal device according to the delay requirement information.

It should be noted that the resource allocation mode corresponding to the SL PRS may include a first resource allocation mode (mode 1) based on resource selection by the network device and a second resource allocation mode (mode 2) based on resource selection by the terminal device.

In the first resource allocation mode, the first radio resource used for transmitting SLPRS can be indicated to the first terminal device by the network device (such as a base station) through dynamic scheduling or configured grant.

In some embodiments, the first terminal device may send the delay requirement information to the network device via a sidelink terminal assistance information (UEAssistanceInformationSidelink) message.

In some embodiments, in the case that the network device receives the delay requirement information, it can allocate the first radio resource to the first terminal device according to the delay requirement information, and indicate the allocated first radio resource to the first terminal device through PDCCH dynamic scheduling or configured grant. The first terminal device can send the SL PRS according to the first radio resource.

It should be noted that, unless there is any contradiction, this embodiment can be combined with the aforementioned embodiments or implementations of the present disclosure and their various optional schemes. In this embodiment, the specific implementation manner for the network device to allocate the first radio resource for sending the SL PRS to the first terminal device according to the delay requirement information can refer to the description of the first terminal device determining the first radio resource for sending the SL PRS according to the delay requirement information in the aforementioned embodiment of the present disclosure, which will not be repeated here.

In some embodiments, the resource allocation mode corresponding to the SL PRS can reuse the resource allocation mode of the sidelink.

In other embodiments, the resource allocation mode corresponding to the SL PRS may be a separate resource allocation mode, which may be the same as or different from the resource allocation mode of the sidelink.

In some embodiments, the resource allocation mode corresponding to the SL PRS may be a resource allocation mode pre-set by the first terminal device.

In other embodiments, the resource allocation mode corresponding to the SL PRS may be a resource allocation mode determined by the first terminal device according to the resource mode configuration information received from the network device.

In this way, in the case that the resource allocation mode corresponding to the SL PRS is the first resource allocation mode, the first terminal device can send delay requirement information to the network device to instruct the network device to allocate the first radio resource to the first terminal device according to the delay requirement information.

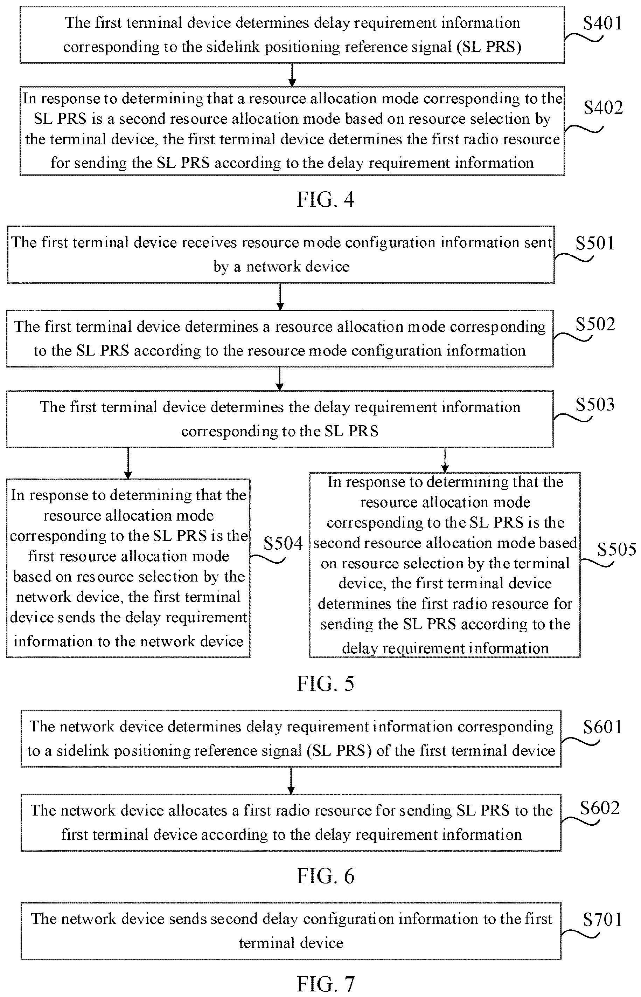

FIG. 4 is a flowchart of a resource determination method according to an exemplary embodiment. As shown in FIG. 4, the method may include the following steps.

In S401, the first terminal device determines delay requirement information corresponding to a sidelink positioning reference signal (SL PRS).

In S402, in response to determining that a resource allocation mode corresponding to the SL PRS is a second resource allocation mode based on resource selection by the terminal device, the first terminal device determines the first radio resource for sending the SL PRS according to the delay requirement information.

In some embodiments, the physical layer of the first terminal device can determine the first radio resource for sending the SL PRS according to the delay requirement information.

In some embodiments, the first terminal device may select the first radio resource based on full sensing and/or partial sensing.

For example, the first terminal device may randomly select the full sensing or the partial sensing to select the first radio resource.

For another example, the first terminal device may select the first radio resource based on a combination of full sensing and partial sensing.

Similarly, the resource allocation mode corresponding to the SL PRS may be a resource allocation mode pre-set by the first terminal device. Alternatively, the resource allocation mode corresponding to the SL PRS may be a resource allocation mode determined by the first terminal device according to resource mode configuration information received from the network device.

It should be noted that, unless there is any contradiction, this embodiment can be combined with the aforementioned embodiments or implementations of the present disclosure and their various optional schemes. In this embodiment, the specific implementation manner of the above steps (for example, the step of the first terminal device determining the first radio resource for sending SL PRS according to the delay requirement information) can also refer to the description in the aforementioned embodiments of the present disclosure and will not be repeated here.

In this way, the first terminal device can autonomously determine the first radio resource for sending the SL PRS according to the delay requirement information in the case that the resource allocation mode corresponding to the SL PRS is the second resource allocation mode.

FIG. 5 is a flowchart of a resource determination method according to an exemplary embodiment. As shown in FIG. 3, the method may include the following steps.

In S501, the first terminal device receives resource mode configuration information sent by a network device.

In S502, the first terminal device determines a resource allocation mode corresponding to the SL PRS according to the resource mode configuration information.

In S503, the first terminal device determines the delay requirement information corresponding to the SL PRS.

In S504, in response to determining that the resource allocation mode corresponding to the SL PRS is the first resource allocation mode based on resource selection by the network device, the first terminal device sends the delay requirement information to the network device.

In S505, in response to determining that the resource allocation mode corresponding to the SL PRS is the second resource allocation mode based on resource selection by the terminal device, the first terminal device determines the first radio resource for sending the SL PRS according to the delay requirement information.

It should be noted that, unless there is any contradiction, this embodiment can be combined with the aforementioned embodiments or implementations of the present disclosure and their various optional schemes. In this embodiment, the specific implementation manners of the above steps can also refer to the description in the aforementioned embodiments of the present disclosure, and will not be repeated here.

In this way, the first terminal device can determine the first radio resource for sending the SL PRS in different ways according to the resource allocation mode corresponding to the SL PRS.

FIG. 6 is a flowchart of a resource determination method according to an exemplary embodiment. The method can be applied to the network device in the above communication system. As shown in FIG. 6, the method may include the following steps.

In S601, the network device determines delay requirement information corresponding to a sidelink positioning reference signal (SL PRS) of the first terminal device.

There may be one or more pieces of the delay requirement information.

In some embodiments, different pieces of delay requirement information correspond to different applications of the first terminal device; the delay requirement information corresponding to different applications may be the same or different.

In some embodiments, the delay requirement information corresponding to different terminal devices may be the same or different.

In some embodiments, the delay requirement information may be information agreed upon by a protocol.

In some embodiments, the delay requirement information may be information pre-configured by the first terminal device. For example, the first terminal device may configure the delay requirement information corresponding to each application for multiple applications. For another example, different terminal devices may configure their own delay requirement information. The network device may obtain the delay requirement information from the first terminal device, for example, the network device may receive the delay requirement information sent by the first terminal device.

In some embodiments, the delay requirement information may be information pre-configured by the network device. For example, the network device may configure the delay requirement information corresponding to each application for multiple applications. For another example, the network device may also configure the delay requirement information corresponding to each terminal device for multiple terminal devices. The network device may send the delay requirement information to the first terminal device.

In some embodiments, the delay requirement information may include at least one of: a delay requirement and a remaining delay requirement.

The delay requirement is used to indicate the duration between the starting moment when the first terminal device starts sending the SL PRS and the end moment when the SL PRS is completed. The starting moment may be the moment when the SL-PRS is triggered to be sent. In one implementation, the starting moment may be the moment when the physical layer of the first terminal device receives the first message; the first message is a request from the higher layer of the first terminal device to the physical layer to determine the first radio resource for sending the SL PRS.

The remaining delay requirement is used to indicate the duration between the current moment and the above end moment.

In some embodiments, the delay requirement may be expressed in units of seconds, milliseconds, slots or symbols. Similarly, the remaining delay requirement may also be expressed in units of seconds, milliseconds, slots or symbols.

In some embodiments, the first terminal device can calculate and obtain the remaining delay requirement according to the current moment and the delay requirement. For example, the first terminal device can determine the end moment based on the starting moment and the delay requirement, and then calculate and obtain the remaining delay requirement according to the current moment and the end moment.

In S602, the network device allocates a first radio resource for sending SL PRS to the first terminal device according to the delay requirement information.

The first radio resource can be the resource used by the first terminal device to send SL PRS.

In some embodiments, in response to determining that the resource allocation mode corresponding to the SL PRS is a first resource allocation mode based on resource selection by the network device, the network device may allocate a first radio resource to the first terminal device according to the delay requirement information.

It should be noted that the resource allocation mode corresponding to the SL PRS may include a first resource allocation mode (mode 1) in which the resource selection is performed based on the network device and a second resource allocation mode (mode 2) in which the resource selection is performed based on the terminal device.

In the first resource allocation mode, the first radio resource used to transmit the SLPRS may be indicated by the network device (e.g., a base station) to the first terminal device by means of dynamic scheduling or configured grant.

In some embodiments, the network device may indicate the allocated first radio resource to the first terminal device by way of PDCCH dynamic scheduling or configured grant. The first terminal device may send SL PRS according to the first radio resource.

It should be noted that, unless there is any contradiction, this embodiment can be combined with the aforementioned embodiments or implementations of the present disclosure and their various optional schemes. In this embodiment, the specific implementation method of the network device allocating the first radio resource for sending the SL PRS to the first terminal device according to the delay requirement information can refer to the description of the first terminal device determining the first radio resource for sending the SL PRS according to the delay requirement information in the aforementioned embodiment of the present disclosure, which will not be repeated here.

In some embodiments, the resource allocation mode corresponding to the SL PRS can reuse the resource allocation mode of the sidelink.

In other embodiments, the resource allocation mode corresponding to the SL PRS may be a separate resource allocation mode, which may be the same as or different from the resource allocation mode of the sidelink.

In some embodiments, the resource allocation mode corresponding to the SL PRS can be a resource allocation mode pre-set by the network device.

In other embodiments, the resource allocation mode corresponding to the SL PRS may be a resource allocation mode determined by the network device according to the resource mode configuration information received from the first terminal device.

In this way, the network device can allocate the first radio resource for sending SL PRS to the first terminal device according to the delay requirement information, thereby improving the timeliness of SL PRS sending.

FIG. 7 is a flowchart of a resource determination method according to an exemplary embodiment. As shown in FIG. 7, the method may include the following steps.

In S701, the network device sends second delay configuration information to the first terminal device.

The second delay configuration information is used to instruct the first terminal device to determine the delay requirement information.

In some embodiments, the network device may send the second delay requirement configuration information to the first terminal device via PDCCH.

In other embodiments, the network device may send the second delay requirement configuration information to the first terminal device via a second message.

The second message may include at least one of an RRC message, a MAC CE, DCI or other messages sent by the network device to the first terminal device.

In this way, the network device can send the second delay configuration information to the first terminal device, and the second delay configuration information can be used to instruct the first terminal device to determine the delay requirement information.

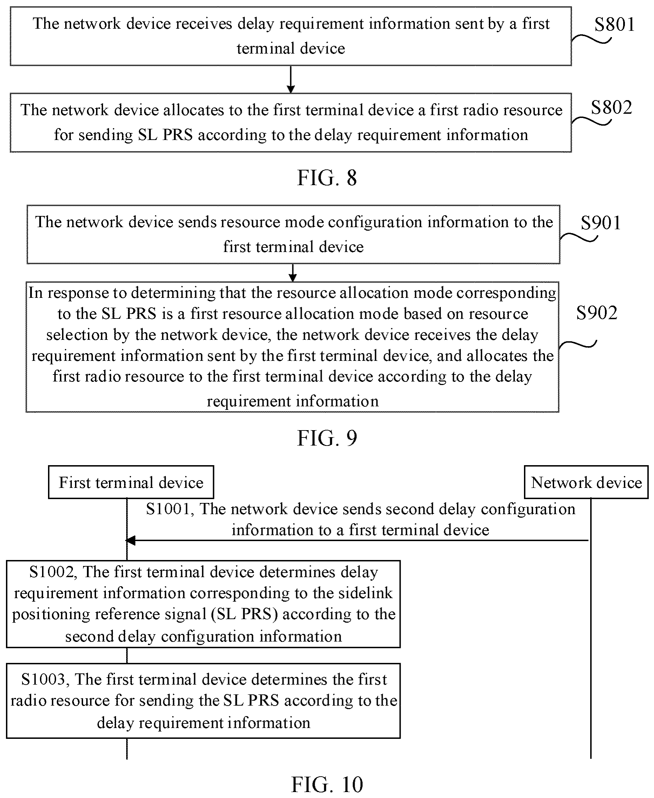

FIG. 8 is a flowchart of a resource determination method according to an exemplary embodiment. As shown in FIG. 8, the method may include the following steps.

In S801, the network device receives delay requirement information sent by a first terminal device.

In some embodiments, the first terminal device may send the delay requirement information to the network device via a sidelink UE assistance information (UEAssistanceInformationSidelink) message.

In S802, the network device allocates to the first terminal device a first radio resource for sending SL PRS according to the delay requirement information.

It should be noted that, unless there is any contradiction, this embodiment can be combined with the aforementioned embodiments or implementations of the present disclosure and their various optional schemes. In this embodiment, the specific implementation manners of the above steps can also refer to the description in the aforementioned embodiments of the present disclosure, and will not be repeated here.

In this way, the network device can allocate a first radio resource for sending SL PRS to the first terminal device according to the delay requirement information.

FIG. 9 is a flowchart of a resource determination method according to an exemplary embodiment. As shown in FIG. 9, the method may include the following steps.

In S901, the network device sends resource mode configuration information to the first terminal device.

The resource mode configuration information is used to indicate to the first terminal device a resource allocation mode corresponding to SL PRS.

In S902, in response to determining that the resource allocation mode corresponding to the SL PRS is a first resource allocation mode based on resource selection by the network device, the network device receives the delay requirement information sent by the first terminal device, and allocates the first radio resource to the first terminal device according to the delay requirement information.

It should be noted that the resource allocation mode corresponding to the SL PRS may include a first resource allocation mode (mode 1) for selecting resources based on the network device and a second resource allocation mode (mode 2) for selecting resources based on the terminal device.

In the first resource allocation mode, the first radio resource used for transmitting SLPRS can be indicated to the first terminal device by the network device (such as a base station) through dynamic scheduling or configured grant.

It should also be noted that, unless there is any contradiction, this embodiment can be combined with the aforementioned embodiments or implementations of the present disclosure and their various optional schemes. In this embodiment, the specific implementation manners of the above steps can also refer to the description in the aforementioned embodiments of the present disclosure, and will not be repeated here.

In this way, in the case that the resource allocation mode is the first resource allocation mode, the network device can allocate the first radio resource for sending SL PRS to the first terminal device according to the delay requirement information.

FIG. 10 is a flowchart of a resource determination method according to an exemplary embodiment. As shown in FIG. 10, the method may include the following steps.

In S1001, the network device sends second delay configuration information to a first terminal device.

In S1002, the first terminal device determines delay requirement information corresponding to the sidelink positioning reference signal (SL PRS) according to the second delay configuration information.

In S1003, the first terminal device determines the first radio resource for sending the SL PRS according to the delay requirement information.

It should be noted that, unless there is any contradiction, this embodiment can be combined with the aforementioned embodiments or implementations of the present disclosure and their various optional schemes. In this embodiment, the specific implementation manners of the above steps can also refer to the description in the aforementioned embodiments of the present disclosure, and will not be repeated here.

In this way, the first terminal device can determine the delay requirement information corresponding to the sidelink positioning reference signal (SL PRS) according to the second delay configuration information, and determine the first radio resource for sending the SL PRS according to the delay requirement information.

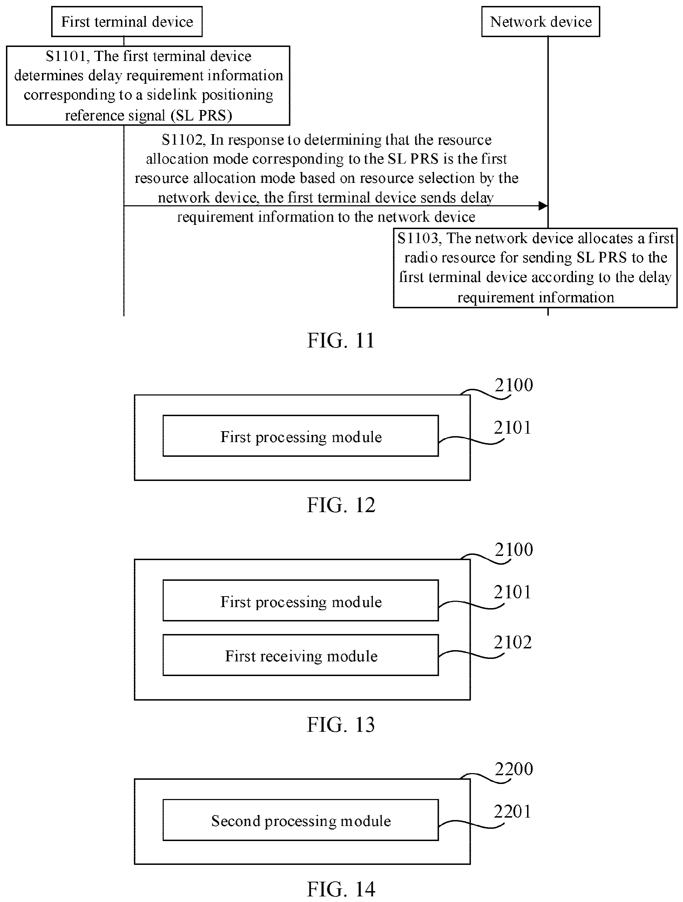

FIG. 11 is a flowchart of a resource determination method according to an exemplary embodiment. As shown in FIG. 11, the method may include the following steps.

In S1101, the first terminal device determines the delay requirement information corresponding to the sidelink positioning reference signal (SL PRS).

In S1102, in response to determining that the resource allocation mode corresponding to the SL PRS is the first resource allocation mode based on resource selection by the network device, the first terminal device sends delay requirement information to the network device.

In S1103, the network device allocates a first radio resource for sending SL PRS to the first terminal device according to the delay requirement information.

It should be noted that, unless there is any contradiction, this embodiment can be combined with the aforementioned embodiments or implementations of the present disclosure and their various optional schemes. In this embodiment, the specific implementation manners of the above steps can also refer to the description in the aforementioned embodiments of the present disclosure, and will not be repeated here.

In this way, when the resource allocation mode corresponding to the SL PRS is the first resource allocation mode, the first terminal device can send delay requirement information to the network device to instruct the network device to allocate the first radio resource to the first terminal device according to the delay requirement information.

In an exemplary embodiment, the present disclosure further provides a communication system, which may include a first terminal device and a network device, where the first terminal device may perform the resource determination method involving the terminal device in the foregoing embodiment(s) of the present disclosure. In addition, the network device may perform the resource determination method(s) involving the network device in the foregoing embodiment(s).

In some embodiments of the present disclosure, the physical layer of the first terminal device can obtain the delay requirement information of the SL-PRS sending. If the first terminal device adopts an autonomous resource allocation method, the physical layer of the first terminal device can select the first radio resource (for example, time-frequency resource) used for sending SL-PRS according to the delay requirement information.

In some embodiments, the delay requirement information of the SL-PRS sending may be configured per application, or per UE, or by system agreement.

In some embodiments, the autonomous resource selection may be based on full sensing, partial sensing, random selection, or a combination of full sensing and partial sensing.

In some embodiments of the present disclosure, the manner in which the physical layer of the first terminal device obtains the delay requirement information of the SL-PRS sending may include any of the following manners.

First manner: The SLPP/LPP layer of the first terminal device informs the physical layer of the delay requirement information of the SL-PRS sending.

In one implementation, the SLPP/LPP layer of the first terminal device may obtain the delay requirement from the application layer of the UE, or obtain the delay requirement from the SLPP layer of other terminal device(s).

In one implementation, the SLPP/LPP of the first terminal device may indicate the delay requirement of the SL-PRS per session.

Second manner: The RRC layer of the first terminal device informs the physical layer of the delay requirement information of the SL-PRS sending.

In one implementation, the RRC layer of the first terminal device may obtain the delay requirement from the SLPP/LPP layer of the first terminal device, or obtain the delay requirement from the RRC layer of the access network device or the LPP layer of the LMF, or obtain the delay requirement from the RRC layer of other terminal device(s).

In one implementation, the RRC layer can carry the delay requirement information of SL-PRS in the logical channel configuration or SRB/DRB configuration information, and the first terminal device can determine the delay requirement configuration information according to the triggering of the SRB/DRB or logical channel corresponding to the SL-PRS.

Third manner: The delay requirement agreed by system is used as the delay requirement information of the SL-PRS sending.

Fourth manner: the delay requirement information is obtained by receiving the delay requirement configuration information indicated by the base station via PDCCH, or the delay requirement configuration information indicated by another UE through the SCI.

In some embodiments of the present disclosure, the delay requirement information of the SL-PRS sending may include at least one of the following:

a delay requirement, where the delay requirement can be expressed in seconds, milliseconds, number of frames, number of subframes, number of slots, or number of symbols;

a remaining delay requirement, where the unit of the remaining delay requirement can also be seconds, milliseconds, number of frames, number of subframes, number of slots, or number of symbols.

The first terminal device can calculate and obtain the remaining delay requirement according to the delay requirement.

For example, the first terminal device can calculate the remaining delay requirement based on the moment when the SL-PRS sending is triggered and the delay requirement of the SL-PRS, combined with the time that has passed since the moment of triggering the SL-PRS sending.

In some embodiments of the present disclosure, when the physical layer of the first terminal device selects the first radio resource for sending SL-PRS based on the delay requirement information, the distance between the time domain position of the selected first radio resource and the moment when the upper layer requests the physical layer to select the sending resource is less than or equal to the above delay requirement.

For example, if the higher layer requests the physical layer to select resources for sending PSSCH/PSCCH/SL-PRS in slot n, the first radio resource selected by the first terminal device is within the time domain window [n+T1, n+T2].

In one implementation, T1 may be a time autonomously selected by the first terminal device, T1 may be greater than or equal to 0, and T1 may be less than or equal to $T_{proc,1}^{SL}$. $T_{proc,1}^{SL}$ may be a pre-set time, and $T_{proc,1}^{SL}$ may be used to indicate the maximum time that the first terminal device processes the data of the sidelink. $T_{proc,1}^{SL}$ is less than or equal to the above delay requirement.

In one implementation, if $T_{2min}$ is less than the delay requirement, the UE autonomously selects a T2 value within the range from $T_{2min}$ to the delay requirement; if $T_{2min}$ is greater than or equal to the delay requirement, the delay requirement may be used as T2, that is, T2 = delay requirement. It should be noted that $T_{2min}$ may be a value in sl-Selection WindowList configured by a higher layer.

In this way, through any of the described methods, the time domain position of the first radio resource used to send SL PRS can be determined according to the delay requirement information.

In some embodiments of the present disclosure, if the first terminal device is configured to adopt SL resource allocation mode 1 (that is, the resource used by SL-PRS is indicated by dynamic scheduling of the base station or configured grant) to obtain the SL-PRS resource, the first terminal device can indicate the delay requirement information of the SL-PRS to the network device.

In one implementation, the first terminal device may send the delay requirement information of the SL PRS to the network device. For example, the first terminal device may send the delay requirement information to the network device via a UEAssistanceInformationSidelink message.

It should be noted that the SL resource allocation mode may be a resource allocation mode configured solely for the SL-PRS, or may reuse the entire SL resource allocation mode configuration.

FIG. 12 is a block diagram of a resource determination apparatus 2100 according to an exemplary embodiment. The apparatus may be applied to a first terminal device. As shown in FIG. 12, the apparatus 2100 may include a first processing module 2101.

The first processing module 2101 is configured to determine delay requirement information corresponding to a sidelink positioning reference signal (SL PRS); and determine a first radio resource for sending the SL PRS according to the delay requirement information.

In some embodiments, the first processing module 2101 is configured to, in response to determining that the resource allocation mode corresponding to the SL PRS is a first resource allocation mode based on resource selection by the network device, send the delay requirement information to the network device; where the delay requirement information is used to instruct the network device to allocate the first radio resource to the first terminal device according to the delay requirement information.

In some embodiments, the first processing module 2101 is configured to, in response to determining that the resource allocation mode corresponding to the SL PRS is a second resource allocation mode based on resource selection by a terminal device, determine, by the physical layer of the first terminal device, the first radio resource for sending the SL PRS according to the delay requirement information.

In some embodiments, the first processing module 2101 is configured to obtain the delay requirement information through the first protocol layer of the first terminal device; where the first protocol layer includes a radio resource control (RRC) layer, an LTE positioning protocol (LPP) layer or a sidelink LTE positioning protocol (SLPP) layer.

In some embodiments, the first processing module 2101 is configured to determine the delay requirement information according to pre-configured first delay configuration information.

In some embodiments, the first processing module 2101 is configured to receive second delay configuration information sent by the network device; and determine the delay requirement information according to the second delay configuration information.

In some embodiments, the delay requirement information includes at least one of the following:

a delay requirement; where the delay requirement is used to indicate the duration between the starting moment when the first terminal device starts sending the SL PRS and the end moment when the sending of the SL PRS is completed, the starting moment being the moment when the physical layer of the first terminal device receives the first message; the first message is a request from the higher layer of the first terminal device to the physical layer to determine the first radio resource for sending the SL PRS;

a remaining delay requirement: where the remaining delay requirement is used to indicate the duration between the current moment and the end moment.

In some embodiments, the first processing module 2101 is configured to determine the end moment of completing the sending of the SL PRS according to the delay requirement information; and determine the first radio resource for sending the SL PRS from the second radio resource before the end moment.

In some embodiments, there are one or more pieces of the delay requirement information, and different delay requirement information corresponds to different applications of the first terminal device.

FIG. 13 is a block diagram of a resource determination apparatus 2100 according to an exemplary embodiment. As shown in FIG. 13, the apparatus 2100 may also include:

a first receiving module 2102, configured to receive resource mode configuration information sent by the network device;

a first processing module 2101, configured to determine a resource allocation mode corresponding to the SL PRS according to the resource mode configuration information.

FIG. 14 is a block diagram of a resource determination apparatus 2200 according to an exemplary embodiment. The apparatus may be applied to a network device. As shown in FIG. 14, the apparatus 2200 may include:

a second processing module 2201, configured to determine the delay requirement information corresponding to the sidelink positioning reference signal (SL PRS) of the first terminal device; in response to determining that the resource allocation mode corresponding to the SL PRS is a first resource allocation mode based on resource selection of a network device, allocate a first radio resource for sending the SL PRS to the first terminal device according to the delay requirement information.

In some embodiments, the second processing module 2201 is configured to receive delay requirement information sent by the first terminal device.

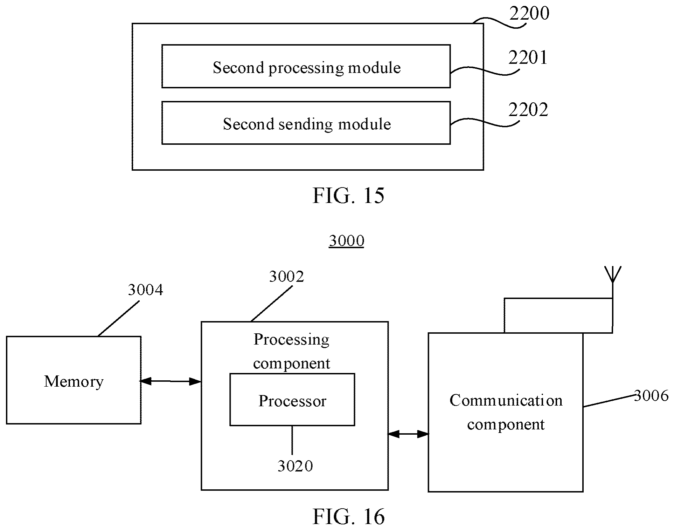

FIG. 15 is a block diagram of a resource determination apparatus 2200 according to an exemplary embodiment. As shown in FIG. 15, the apparatus 2200 may also include:

a second sending module 2202, configured to send resource mode configuration information to the first terminal device; where the resource mode configuration information is used to indicate the resource allocation mode corresponding to the SL PRS of the first terminal device.

In some embodiments, the second sending module 2202 is further configured to send second delay configuration information to the first terminal device, and the second delay configuration information is used to instruct the first terminal device to determine the delay requirement information.

In some embodiments, the delay requirement information includes at least one of the following:

a delay requirement; where the delay requirement is used to indicate the duration between the starting moment when the first terminal device starts sending the SL PRS and the end moment when the sending of the SL PRS is completed, the starting moment being the moment when the physical layer of the first terminal device receives the first message; the first message is a request from the higher layer of the first terminal device to the physical layer to determine the first radio resource for sending the SL PRS;

a remaining delay requirement: where the remaining delay requirement is used to indicate the duration between the current moment and the end moment.

In some embodiments, there are one or more pieces of the delay requirement information, and different delay requirement information corresponds to different applications of the first terminal device.

Regarding the apparatuses in the above embodiments, the specific manner in which each module performs operations has been described in detail in the embodiments of the method, and will not be elaborated here.

FIG. 16 is a block diagram of a resource determination apparatus according to an exemplary embodiment. The resource determination apparatus 3000 may be the terminal device (e.g., the first terminal device or the second terminal device) in the communication system shown in FIG. 1, or may be the network device in the communication system.

Referring to FIG. 16, the apparatus 3000 may include one or more of the following components: a processing component 3002, a memory 3004, and a communication component 3006.

The processing component 3002 can be used to control the overall operation of the apparatus 3000, such as operations associated with display, phone calls, data communications, camera operations, and recording operations. The processing component 3002 can include one or more processors 3020 to execute instructions to complete all or part of the steps of the resource determination method(s) described. In addition, the processing component 3002 can include one or more modules to facilitate the interaction between the processing component 3002 and other components. For example, the processing component 3002 can include a multimedia module to facilitate the interaction between a multimedia component and the processing component 3002.

The memory 3004 is configured to store various types of data to support operations of the apparatus 3000. Examples of such data include instructions for any application or method operating on the apparatus 3000, contact data, phone book data, messages, pictures, videos, etc. The memory 3004 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 3006 is configured to facilitate wired or wireless communication between the apparatus 3000 and other devices. The apparatus 3000 can access a wireless network based on a communication standard, such as Wi-Fi, 2G, 3G, 4G, 5G, 6G, NB-IOT, eMTC, etc., or a combination thereof. In an exemplary embodiment, the communication component 3006 receives a broadcast signal or broadcast-related information from an external broadcast management system via a broadcast channel. In an exemplary embodiment, the communication component 3006 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute the above-mentioned resource determination method.

The apparatus 3000 can be an independent electronic device or a part of an independent electronic device. For example, in one embodiment, the electronic device can be an integrated circuit (IC) or a chip, where the integrated circuit can be one IC or a collection of multiple ICs. The chip can include, but is not limited to, the following types: Graphics Processing Unit (GPU), Central Processing Unit (CPU), Field Programmable Gate Array (FPGA), Digital Signal Processor (DSP), Application Specific Integrated Circuit (ASIC), SOC (System on Chip, SoC), etc. The integrated circuit or chip can be used to execute executable instructions (or codes) to implement the resource determination methods. The executable instructions can be stored in the integrated circuit or chip, and can also be obtained from other apparatus or device. For example, the integrated circuit or chip includes a processor, a memory, and an interface for communicating with other apparatuses. The executable instruction can be stored in the processor, and when the executable instruction is executed by the processor, the resource determination method is implemented; or the integrated circuit or chip can receive the executable instruction through the interface and transmit it to the processor for execution, so as to implement the resource determination methods.

In an exemplary embodiment, the present disclosure further provides a computer-readable storage medium having computer program instructions stored thereon, which, when executed by a processor, implement the steps of the resource determination method provided by the present disclosure. By way of example, the computer-readable storage medium may be a non-transitory computer-readable storage medium including instructions, for example, the above-mentioned memory 3004 including instructions, and the above-mentioned instructions may be executed by the processor 3020 of the apparatus 3000 to complete the above-mentioned resource determination methods. For example, the non-transitory computer-readable storage medium may be a ROM, a random access memory (RAM), a CD-ROM, a magnetic tape, a floppy disk, an optical data storage device, and the like.

In another exemplary embodiment, a computer program product is further provided. The computer program product includes a computer program executable by a programmable apparatus. The computer program has a code portion for executing the resource determination method(s) when executed by the programmable apparatus.

Those skilled in the art will readily appreciate other embodiments of the present disclosure after considering the specification and practicing the present disclosure. This application is intended to cover any variations, uses, or adaptations of the present disclosure that follow the general principles of the present disclosure and include common knowledge or customary techniques in the art that are not disclosed in the present disclosure. The specification and embodiments are intended to be exemplary only, and the true scope and spirit of the present disclosure are indicated by the appending claims.

It should be understood that the present disclosure is not limited to the exact structures that have been described above and shown in the drawings, and that various modifications and changes may be made without departing from the scope thereof. The scope of the present disclosure is limited only by the appended claims.

**Claims**

1. A resource determination method, performed by a first terminal device, comprising:

   determining delay requirement information corresponding to a sidelink positioning reference signal (SL PRS); and
   determining a first radio resource for sending the SL PRS according to the delay requirement information.

2. The method according to claim 1, wherein determining the first radio resource for sending the SL PRS according to the delay requirement information comprises:
in response to determining that a resource allocation mode corresponding to the SL PRS is a first resource allocation mode based on resource selection by a network device, sending the delay requirement information to the network device; wherein the delay requirement information is used to instruct the network device to allocate the first radio resource to the first terminal device according to the delay requirement information.

3. The method according to claim 1, wherein determining the first radio resource for sending the SL PRS according to the delay requirement information comprises:
in response to determining that a resource allocation mode corresponding to the SL PRS is a second resource allocation mode based on resource selection by a terminal device, determining, by a physical layer of the first terminal device, the first radio resource for sending the SL PRS according to the delay requirement information.

4. The method according to claim 1, wherein determining the delay requirement information corresponding to the sidelink positioning reference signal (SL PRS) comprises:
obtaining the delay requirement information through a first protocol layer of the first terminal device; wherein the first protocol layer comprises a radio resource control (RRC) layer, an LTE positioning protocol (LPP) layer or a sidelink LTE positioning protocol (SLPP) layer.

5. The method according to claim 1, wherein determining the delay requirement information corresponding to the sidelink positioning reference signal (SL PRS) comprises:
determining the delay requirement information according to pre-configured first delay configuration information.

6. The method according to claim 1, wherein determining the delay requirement information corresponding to the sidelink positioning reference signal (SL PRS) comprises:

receiving second delay configuration information sent by a network device; and
determining the delay requirement information according to the second delay configuration information.

7. The method according to claim 1, wherein the delay requirement information comprises at least one of:

a delay requirement; wherein the delay requirement is used to indicate a duration between a starting moment when the first terminal device starts sending the SL PRS and an end moment when the sending of the SL PRS is completed, the starting moment is a moment when a physical layer of the first terminal device receives a first message; the first message is a request from a higher layer of the first terminal device to the physical layer to determine the first radio resource for sending the SL PRS;
a remaining delay requirement; wherein the remaining delay requirement is used to indicate a duration between a current moment and the end moment.

8. The method according to claim 7, wherein determining the first radio resource for sending the SL PRS according to the delay requirement information comprises:

determining the end moment of completing the sending of the SL PRS according to the delay requirement information;
determining the first radio resource for sending the SL PRS from a second radio resource before the end moment.

9. The method according to any one of claims 1 to 8, wherein the delay requirement information is one or more pieces, and different pieces of delay requirement information corresponds to different applications of the first terminal device.

10. The method according to claim 2 or 3, wherein the method further comprises:

receiving resource mode configuration information sent by a network device;
determining the resource allocation mode corresponding to the SL PRS according to the resource mode configuration information.

11. A resource determination method, performed by a network device, comprising:

determining delay requirement information corresponding to a sidelink positioning reference signal (SL PRS) of a first terminal device; and
in response to determining that a resource allocation mode corresponding to the SL PRS is a first resource allocation mode based on resource selection by the network device, allocating a first radio resource for sending the SL PRS to the first terminal device according to the delay requirement information.

12. The method according to claim 11, wherein determining the delay requirement information corresponding to the sidelink positioning reference signal (SL PRS) of the first terminal device comprise:
receiving the delay requirement information sent by the first terminal.

13. The method according to claim 11, wherein the method further comprises:
sending resource mode configuration information to the first terminal device; wherein the resource mode configuration information is used to indicate to the first terminal device the resource allocation mode corresponding to the SL PRS.

14. The method according to claim 11, wherein the method further comprises:
sending second delay configuration information to the first terminal device; wherein the second delay configuration information is used to instruct the first terminal device to determine the delay requirement information.

15. The method according to any one of claims 11 to 14, wherein the delay requirement information comprises at least one of:

a delay requirement; wherein the delay requirement is used to indicate a duration between a starting moment when the first terminal device starts sending the SL PRS and an end moment when the sending of the SL PRS is completed, the starting moment is a moment when a physical layer of the first terminal device receives a first message; the first message is a request from a higher layer of the first terminal device to the physical layer to determine the first radio resource for sending the SL PRS;
a remaining delay requirement; wherein the remaining delay requirement is used to indicate a duration between a current moment and an end moment.

16. The method according to any one of claims 11 to 14, wherein the delay requirement information is one or more pieces, and different pieces of delay requirement information corresponds to different applications of the first terminal device.

17. A resource determination apparatus, applied to a first terminal device, wherein the apparatus comprises:
a first processing module, configured to determine delay requirement information corresponding to a sidelink positioning reference signal (SL PRS); and determine a first radio resource for sending the SL PRS according to the delay requirement information.

18. A resource determination apparatus, applied to a network device, wherein the apparatus comprises:
a second processing module, configured to determine delay requirement information corresponding to a sidelink positioning reference signal (SL PRS) of a first terminal device; and in response to determining that a resource allocation mode corresponding to the SL PRS is a first resource allocation mode based on resource selection by the network device, allocate a first radio resource for sending the SL PRS to the first terminal device according to the delay requirement information.

19. A resource determination apparatus, wherein the apparatus comprises:

a processor; and
a memory for storing instructions executable by the processor;
wherein the processor is configured to perform the steps of the method according to any one of claims 1 to 10, or the processor is configured to perform the steps of the method according to any one of claims 11 to 16.

20. A computer-readable storage medium having computer program instructions stored thereon, wherein when the computer program instructions are executed by a processor, the steps of the method according to any one of claims 1 to 10 are implemented, or when the computer program instructions are executed by the processor, the steps of the method according to any one of claims 11 to 16 are implemented.

21. A communication system, comprising:

a first terminal device, wherein the first terminal device performs the method according to any one of claims 1 to 10; and
a network device, wherein the network device performs the method according to any one of claims 11 to 16.

100

160

Network device

150

151

First terminal
device

152

Second terminal
device

FIG. 1

| A first terminal device determines delay requirement information corresponding to a sidelink positioning reference signal (SL PRS) | S201 |

| The first terminal device determines a first wireless resource used to send the SL PRS according to the delay requirement information | S202 |

FIG. 2

| The first terminal device determines delay requirement information corresponding to a sidelink positioning reference signal (SL PRS) | S301 |

| In response to determining that a resource allocation mode corresponding to the SL PRS is a first resource allocation mode based on resource selection by the network device, the first terminal device sends delay requirement information to the network device | S302 |

FIG. 3

The first terminal device determines delay requirement information corresponding to the sidelink positioning reference signal (SL PRS) — S401

In response to determining that a resource allocation mode corresponding to the SL PRS is a second resource allocation mode based on resource selection by the terminal device, the first terminal device determines the first radio resource for sending the SL PRS according to the delay requirement information — S402

FIG. 4

The first terminal device receives resource mode configuration information sent by a network device — S501

The first terminal device determines a resource allocation mode corresponding to the SL PRS according to the resource mode configuration information — S502

The first terminal device determines the delay requirement information corresponding to the SL PRS — S503

In response to determining that the resource allocation mode corresponding to the SL PRS is the first resource allocation mode based on resource selection by the network device, the first terminal device sends the delay requirement information to the network device — S504

In response to determining that the resource allocation mode corresponding to the SL PRS is the second resource allocation mode based on resource selection by the terminal device, the first terminal device determines the first radio resource for sending the SL PRS according to the delay requirement information — S505

FIG. 5

The network device determines delay requirement information corresponding to a sidelink positioning reference signal (SL PRS) of the first terminal device — S601

The network device allocates a first radio resource for sending SL PRS to the first terminal device according to the delay requirement information — S602

FIG. 6

The network device sends second delay configuration information to the first terminal device — S701

FIG. 7

The network device receives delay requirement information sent by a first terminal device

S801

The network device allocates to the first terminal device a first radio resource for sending SL PRS according to the delay requirement information

S802

FIG. 8

The network device sends resource mode configuration information to the first terminal device

S901

In response to determining that the resource allocation mode corresponding to the SL PRS is a first resource allocation mode based on resource selection by the network device, the network device receives the delay requirement information sent by the first terminal device, and allocates the first radio resource to the first terminal device according to the delay requirement information

S902

FIG. 9

First terminal device

Network device

S1001, The network device sends second delay configuration information to a first terminal device

S1002, The first terminal device determines delay requirement information corresponding to the sidelink positioning reference signal (SL PRS) according to the second delay configuration information

S1003, The first terminal device determines the first radio resource for sending the SL PRS according to the delay requirement information

FIG. 10

First terminal device

Network device

S1101, The first terminal device determines delay requirement information corresponding to a sidelink positioning reference signal (SL PRS)

S1102, In response to determining that the resource allocation mode corresponding to the SL PRS is the first resource allocation mode based on resource selection by the network device, the first terminal device sends delay requirement information to the network device

S1103, The network device allocates a first radio resource for sending SL PRS to the first terminal device according to the delay requirement information

FIG. 11

2100

First processing module          2101

FIG. 12

2100

First processing module          2101

First receiving module            2102

FIG. 13

2200

Second processing module         2201

FIG. 14

2200

Second processing module — 2201

Second sending module — 2202

FIG. 15

3000

3004

Memory

3002

Processing component

Processor

3020

Communication component

3006

FIG. 16

## INTERNATIONAL SEARCH REPORT

| International application No. |
| --- |
| **PCT/CN2023/074168** |

| A. | CLASSIFICATION OF SUBJECT MATTER |
| --- | --- |

H04W72/40(2023.01)i

According to International Patent Classification (IPC) or to both national classification and IPC

| B. | FIELDS SEARCHED |
| --- | --- |

Minimum documentation searched (classification system followed by classification symbols)

IPC： H04W

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 定位参考信号, 定位导频, 服务质量, 时延, 延迟, 延时, 要求, 需求, 资源, 侧行链路, 侧链路, 旁链路, 副链路, 直通链路, positioning reference signal, PRS, delay, latency, QoS, demand, requirement, PC5, sidelink, SL, v2v, D2D, resource

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114765730 A (RESEARCH INSTITUTE OF CHINA MOBILE COMMUNICATIONS CORPORATION et al.) 19 July 2022 (2022-07-19) <br> description, paragraphs [0006]-[0364] | 1-21 |
| X | CN 115499926 A (OPPO GUANGDONG MOBILE TELECOMMUNICATIONS CO., LTD.) 20 December 2022 (2022-12-20) <br> description, paragraphs [0063]-[0282] | 1-21 |
| X | WO 2022015013 A1 (SAMSUNG ELECTRONICS CO., LTD.) 20 January 2022 (2022-01-20) <br> description, paragraphs [15]-[97] | 1-21 |
| A | WO 2022212533 A1 (IDAC HOLDINGS, INC.) 06 October 2022 (2022-10-06) <br> entire document | 1-21 |
| A | LG ELECTRONICS. "Discussion on Potential Solutions for SL Positioning" <br> *3GPP TSG RAN WG1 Meeting #109-E R1-2203720*, 29 April 2022 (2022-04-29), <br> entire document | 1-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2023** | **19 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/074168**

| Patent document cited in search report | | | Publication date (day/month/year) | Patent family member(s) | | | Publication date (day/month/year) |
|---|---|---|---|---|---|---|---|
| CN | 114765730 | A | 19 July 2022 | None | | | |
| CN | 115499926 | A | 20 December 2022 | WO | 2021155497 | A1 | 12 August 2021 |
| WO | 2022015013 | A1 | 20 January 2022 | GB | 2597247 | A | 26 January 2022 |
| | | | | GB | 2597247 | B | 15 February 2023 |
| WO | 2022212533 | A1 | 06 October 2022 | None | | | |

Form PCT/ISA/210 (patent family annex) (July 2022)